Europäisches Patentamt

European Patent Office

Office européen des brevets

(19)

(11) Veröffentlichungsnummer : **0 178 455**
**B1**

(12) # EUROPÄISCHE PATENTSCHRIFT

(45) Veröffentlichungstag der Patentschrift :
02.12.87

(21) Anmeldenummer : 85111423.1

(22) Anmeldetag : 10.09.85

(51) Int. Cl.⁴ : **B 60 H    1/00**

(54) Steuergerät für Heizungs-, Klima- und Lüftungsanlagen in Kraftfahrzeugen.

(30) Priorität : 26.09.84 DE 3435359

(43) Veröffentlichungstag der Anmeldung :
23.04.86 Patentblatt 86/17

(45) Bekanntmachung des Hinweises auf die Patenterteilung : 02.12.87 Patentblatt 87/49

(84) Benannte Vertragsstaaten :
AT BE DE FR GB IT NL SE

(56) Entgegenhaltungen :
EP-A- 0 087 084
EP-A- 0 129 662
PATENTS ABSTRACTS OF JAPAN, Band 7, Nr. 59 (M-199) [1204], 11. März 1983

(73) Patentinhaber : Siemens Aktiengesellschaft Berlin und München
Wittelsbacherplatz 2
D-8000 München 2 (DE)

(72) Erfinder : Hildebrand, Reinhard
Hauptstrasse 11
D-8627 Redwitz (DE)
Erfinder : Riedel, Friedrich
Untere Dorfstrasse 44
D-8627 Redwitz (DE)

## Beschreibung

Die Erfindung betrifft ein Steuergerät für Heizungs-, Klima- und Lüftungsanlagen in Kraftfahrzeugen, bei dem in einem Kunststoffgrundkörper in einer Führungsbahn ein mit einem Betätigungsorgan verbundener Schlitten bewegbar angeordnet ist, an dem das eine Ende eines Zwischenhebels gelagert ist, dessen anderes Ende an einem Stellhebel für die zu betätigende Vorrichtung angelenkt ist. Derartige Vorrichtungen befinden sich vorwiegend an Instrumententafeln von Kraftfahrzeugen.

In Kraftfahrzeugen kann gemäß bekannten Vorrichtungen eine Regeleinrichtung mittels eines Bowdenzuges betätigt werden, wobei für die zwangsläufige Übertragung der Stellbewegung zwischen dem Drehknopf und dem Befestigungspunkt des Bowdenzuges eine Zahnstange vorgesehen ist (DE-OS 30 49 125, DE-AS 25 10 944, DE-OS 25 23 331). Der Drehknopf ist an der Zahnradwelle angebracht.

In der gattungsbildenden deutschen DE-A-32 06 288 ist ein Steuergerät mit Gleitführung für Heizungs-, Klima- und Lüftungsanlagen in Kraftfahrzeugen beschrieben, bei dem sich zwischen dem (den) Stellhebel(n) und dem (den) Befestigungshebel(n) ein drehbar gelagerter Zwischenhebel befindet.

Die bekannten Ausführungen ermöglichen noch nicht die Übertragung einer Drehbewegung des Betätigungshebels in eine Drehbewegung des Stellhebels mit Selbstverriegelung.

Aufgabe der Erfindung ist es ein einfaches und konstruktiv nicht aufwendiges Steuergerät zu schaffen, das die kreisförmige Bewegung des Betätigungshebels in eine kreisförmige Bewegung des Stellhebels umsetzt und das auch die Selbstverriegelungsfunktion der Kinematik des Steuergerätes ermöglicht.

Die Aufgabe wird dadurch gelöst, daß erfindungsgemäß der Schlitten eine Zahnstange aufweist, in die ein Ritzel mit Welle eingreift, das an dem Kunststoffgrundkörper drehbar gelagert ist und mit dem als Drehknopf ausgebildeten Betätigungsorgan verbunden ist. Schlitten und Zahnstange bilden einen Übertragungshebel.

Vielfach ist es von Vorteil in den Übertragungshebel ein elastomeres Element aus Kunststoff einzubauen, welches unter Vorspannung gegen ein starres Bauteil gepreßt werden kann. Es werden dadurch die erforderlichen Betätigungskräfte noch besser gewährleistet. Sie können durch die Größe der Vorspannung eingestellt werden. Elastomere Kunststoffe mit der Shore-Härte 50° bis 70° haben sich besonders günstig erwiesen.

Durch die Paarung Ritzel und Zahnstange und durch den Zwischenhebel wird es bei einer Ausführung gemäß der Erfindung möglich die kreisförmige Bewegung des Drehknopfes in eine kreisförmige Bewegung des Stellhebels zu übertragen. Die Zahnstange mit Schlitten wirkt als Übertragungshebel. Dieser wird in einer Führungsbahn parallel geführt.

Der Stellhebel kann am Grundkörper mit einem drehbaren Bajonett-Verschluß angebracht sein.

Eine Drehung bzw. ein Drehknopf ist bei der Ausrüstung von Instrumententafeln in Kraftfahrzeugen vielfach erwünscht und von Vorteil. Die Erfindung ermöglicht dies durch eine einfache Konstruktion. Zusätzlich wird noch eine Selbstverriegelung der Kinematik erreicht. Dies ist dann der Fall, wenn die Längsachse des Zwischenhebels mit der Führungsbahn des Übertragungshebels einen Winkel von 90° ± 10° bildet. Das Steuergerät ermöglicht dann die Selbstverriegelung der (des) Stellhebel(s) in mindestens einer Endstellung.

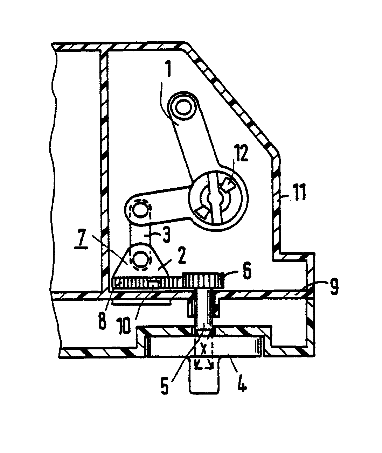

Die Erfindung wird anhand der Zeichnung näher erläutert.

In einem Kunststoffgehäuse 11 sind ein Stellhebel 1, der über einen dazwischengelagerten Zwischenhebel 3 mit einem Übergangshebel 7 verbunden ist, untergebracht. Der Stellhebel 1 ist an dem Grundkörper 11 mittels des drehbaren Bajonett-Verschlusses 12 angebracht. Die Zahnstange 8 mit dem Schlitten 2 bildet den Übertragungshebel 7. Der Übertragungshebel 7 befindet sich auf der Führungsbahn 9. 10 ist ein federndes elastomeres Element. Die Betätigung erfolgt mittels des Drehknopfes 4 mittels der Zahnradwelle 5 mit Ritzel 6 und weiter über die Zahnstange 8 bzw. den Übertragungshebel 7 und den Zwischenhebel 3 zum Stellhebel 1.

## Patentansprüche

1. Steuergerät für Heizungs-, Klima- und Lüftungsanlagen in Kraftfahrzeugen, bei dem in einem Kunststoffgrundkörper (11) in einer Führungsbahn ein mit einem Betätigungsorgan (4) verbundener Schlitten (2) bewegbar angeordnet ist, an dem das eine Ende eines Zwischenhebels (3) gelagert ist, dessen anderes Ende an einem Stellhebel (1) für die zu betätigende Vorrichtung angelenkt ist, dadurch gekennzeichnet, daß der Schlitten (2) eine Zahnstange (8) aufweist, in die ein Ritzel (6) mit der Zahnradwelle (5) eingreift, das an dem Kunststoffgrundkörper (11) drehbar gelagert ist und mit dem als Drehknopf (4) ausgebildeten Betätigungsorgan verbunden ist.

2. Steuervorrichtung nach Anspruch 1, dadurch gekennzeichnet, daß in einem aus Ritzel (6) und Zahnstange (8) bestehenden Übertragungshebel (7) ein elastomeres Kunststoffelement (10) eingebaut ist.

3. Steuergerät nach Anspruch 1 oder 2, dadurch gekennzeichnet, daß die Längsachse des Zwischenhebels (3) mit der Führungsbahn (9) des Übertragungshebels (7) einen Winkel von 90 ± 10° bildet.

4. Steuergerät nach einem der vorangegangenen Ansprüche, dadurch gekennzeichnet, daß der Stellhebel (1) an dem Grundkörper (11) mit einem drehbar gelagerten Bajonett-Verschluß (12) angebracht ist.

## Claims

1. A control device for heating, air-conditioning and ventilating installations in motor vehicles, in which a slide (2) is arranged so as to be mobile in a guide path in a synthetic basic body (11), the slide connecting to an actuating element (4), and being attached to one end of an intermediate lever (3) whose other end is coupled to a control level (1) for the device which is to be actuated, characterised in that the slide (2) comprises a toothed rack (8) into which engages a pinion (6) which is provided with a pinion spindle (5) and which is pivot-mounted on the synthetic basic body (11) and is connected to the actuating element, which consists of a rotating knob (4).

2. A control device as claimed in claim 1, characterised in that an elastomeric synthetic element (10) is incorporated in a transmission lever (7) which consists of pinion (6) and toothed rack (8).

3. A control device as claimed in claim 1 or 2, characterised in that the longitudinal axis of the intermediate lever (3) forms an angle of $90 \pm 10°$ with the guide path (9) of the transmission lever (7).

4. A control device as claimed in one of the preceding claims, characterised in that the adjusting lever (1) is arranged on the basic body (11) with a pivot-mounted bayonet fixing (12).

## Revendications

1. Dispositif de commande pour une installation de chauffage, de climatisation et de ventilation de véhicules automobiles, dans lequel est disposé, dans un corps de base en matière plastique (11), un chariot (2) qui y est déplaçable dans une voie de guidage et qui est relié à un organe de manœuvre (4), chariot auquel est articulée l'une des extrémités d'une biellette (3) dont l'autre extrémité est articulée à un levier de réglage (1) pour le dispositif à manœuvrer, caractérisé par le fait que le chariot (2) comporte une crémaillère (3) avec laquelle engrène un pignon (6) à l'aide de l'arbre à roue dentée (5), lequel pignon est tourillonné dans le corps de matière plastique (11) et est relié à l'organe de manœuvre réalisé sous la forme d'un bouton tournant (4).

2. Dispositif de commande selon la revendication 1, caractérisé par le fait que dans un élément de transmission (7), constitué par le pignon (6) et par la crémaillère (8), est monté un élément (10) fait avec une matière plastique élastomère.

3. Dispositif de commande selon la revendication 1 ou 2, caractérisé par le fait que l'axe longitudinal de la biellette (3) forme avec la voie de guidage (9) du levier de transmission (7), un angle de $90 \pm 10°$.

4. Dispositif de commande selon l'une des revendications précédentes, caractérisé par le fait que le levier du réglage (1) est monté sur le corps de base (11) à l'aide d'un joint à baïonnette (12) monté à rotation.